# EUROPÄISCHE PATENTANMELDUNG

(11) **EP 2 594 816 A2**
(43) Veröffentlichungstag der Anmeldung: **22.05.2013**
(21) Anmeldenummer: 12192787.5
(22) Anmeldetag: 15.11.2012
(51) Int. Cl.: F16C 41/02, F16C 33/60

(54) **Lagervorrichtung und Turbomaschine mit Lagervorrichtung**

(30) Priorität: 18.11.2011 DE 102011086675
(71) Anmelder: Rolls-Royce Deutschland Ltd & Co KG, 15827 Blankenfelde-Mahlow (DE)
(72) Erfinder: Heldner, Sebastian, 10781 Berlin (DE)
(74) Vertreter: Gross, Felix

(57) **Zusammenfassung**

Lagervorrichtung mit einer Anordnung von mindestens zwei Lagern (1, 2), dadurch gekennzeichnet, dass zwischen einem Lagerring (3, 4) mindestens eines des Lager (1, 2) und einem umgebenden Bauteil (2) der Lageranordnung eine Schüttung (5) aus einem formlos-festen Wirkmedium als Mittel zum Ausgleich von Axiallasten angeordnet ist.

Es wird auch eine Turbomaschine mit einer Lagervorrichtung beschrieben.

## Beschreibung

Die Erfindung betrifft eine Lagervorrichtung mit den Merkmalen des Anspruchs 1 und eine Turbomaschine mit einer Lagervorrichtung mit den Merkmalen des Anspruchs 14.

Die Auslegung einer Turbomaschine, insbesondere eines Flugzeugtriebwerkes erfolgt zunächst auf bestimmte geforderte Leistungsmerkmale. Erst anschließend werden die Belastungen der Lagervorrichtungen und anderer mechanischer Komponenten bestimmt. Dies kann dazu führen, dass z.B. ein Triebwerk für eine hohe Leistung optimiert wurde, woraus eine sehr hohe Schublast resultiert, die von Lagervorrichtungen ausgehalten werden muss.

Es besteht daher die Aufgabe, Lagervorrichtungen zu schaffen, die flexibel und effizient sehr hohen Anforderungen bei axialen und radialen Belastungen gerecht werden

Die Aufgabe wird durch eine mehrreihige Lagervorrichtung mit den Merkmalen des Anspruchs 1 gelöst.

Dabei wird zwischen einem Lagerring, mindestens eines der Lager und einem umgebenden Bauteil der Lageranordnung eine Schüttung aus einem formlos-festen Wirkmedium als Mittel zum Ausgleich von Axiallasten angeordnet ist.

Der Lagerring kann dabei ein Außenring oder ein Innenring sein. Wenn zwischen den Lagerringen und einem umgebenden Bauteil eine Schüttung aus einem formlos-festen Wirkmedium als Mittel zum Ausgleich von Axiallasten angeordnet ist, kann das formlos-feste Wirkmedium eine axiale Kraft des einen Lagers aufnehmen und an ein anderes Lager weitergeben

Ausführungsformen der Schüttung können dafür Kugeln, insbesondere Kugeln gleicher Größe aufweisen. Stahlkugeln sind z.B. effizient herstellbar und so stabil, dass der Ausgleich der Axialkräfte effizient möglich ist.

Dabei kann es vorteilhaft sein, wenn der Lagerring als Außenring und das umgebende Bauteil der Lageranordnung als Gehäuse ausgebildet ist. Alternativ oder zusätzlich kann der Lagerring als Innenring und das umgebende Bauteil ein Teil einer Welle sein, die mit dem Innenring gekoppelt ist. Die Schüttung wird dabei jeweils zwischen dem Lagerring und dem umgebenden Bauteil angeordnet und sicher gehalten.

Auch ist es möglich, dass die Lagerringe, insbesondere die Außenringe jeweils eine definierte Kolbenfläche aufweisen, mit denen eine axiale Druckkraft auf die Schüttung ausübbar ist. Die definierte Kolbenfläche des ersten Lagerrings, insbesondere de ersten Außenrings und die Kolbenfläche des zweiten Lagerrings, insbesondere des zweiten Außenrings können unterschiedliche Größen haben. Durch diese Maßnahmen, die einzeln und kombiniert verwendbar sind, besteht eine große Flexibilität, für die Übertragung von Kräften.

In einer zusätzlichen Ausführungsform ist mindestens ein Teil des formlos-festen Wirkmediums in eine Folie verpackt und / oder in eine flexible Kunststoffmasse vergossen ist. Damit kann das Wirkmedium leichter in die Lagervorrichtung eingebracht werden. Auch können die Partikel in der Schüttung schon vorausgerichtet werden. um in Betrieb eine ungünstige "Brückenbildung" zu vermeiden

Ferner kann in Ausführungsformen zwischen den Lagerringen, insbesondere den Außenringen und der Schüttung mindestens ein Druckübertragungselement, insbesondere eine Distanzhülse, ein Ring und oder ein Druckstab angeordnet sein. Dabei ist es besonders vorteilhaft, wenn zwischen den Lagerringen, insbesondere den Außenringen und der Schüttung zwei Druckübertragungselemente in Form konzentrischer Hülsen angeordnet sind. Dadurch sind besonders kompakte oder komplexe Bauformen möglich, bei denen z.B. die Schüttung in axialer Richtung gegenüber den Lagern verschoben ist.

Es gibt Ausführungsformen, bei denen mindestens ein Lager als Wälzlager, als Axial-Luftlager oder als Gleitlager ausgebildet ist.

Auch ist es möglich, dass Wälzkörper als Kugeln, Tonnen, Kegeln oder Zylinder ausgebildet sind.

Ferner ist es möglich, dass mindestens zwei Lager von unterschiedlicher Bauart sind, insbesondere dass ein Lager als Radiallager und ein anders Lager als Axiallager ausgebildet ist.

Dabei ist es bei Ausführungsformen möglich, dass ein Innenring eines Lagers geteilt ausgebildet ist.

Die Aufgabe wird auch durch eine Turbomaschine mit den Merkmalen des Anspruchs 14 gelöst.

Bei einer Ausführungsform der Turbomaschine ist eine Lagervorrichtung bei einem dreiwelligen Flugzeugtriebwerk zwischen einer Niederdruckwelle und einer Mitteldruckwelle oder zwischen einer Mitteldruckwelle und einer Hochdruckwelle oder bei einem zweiwelligen Flugzeugtriebwerk zwischen einer Niederdruckwelle und einer Hochdruckwelle angeordnet.

In Zusammenhang mit den in den Figuren dargestellten Ausführungsbeispielen wird die Erfindung erläutert. Dabei zeigt
- Fig. 1: den grundsätzlichen Aufbau einer Ausführungsform einer Lagervorrichtung;
- Fig. 2: eine Ausführungsform mit einer Schüttung, die teilweise verpackt ist;
- Fig. 3: eine Ausführungsform einer Lagervorrichtung, bei der die Druckübertragung über Kolbenflächen unterschiedlicher Größe erfolgt:
- Fig. 4: eine erste Ausführungsform mit einem Druckübertragungselement;
- Fig. 5: eine zweite Ausführungsform mit einem Druckübertragungselement;
- Fig. 6: eine Darstellung eines Flugzeugtriebwerkes mit einer Ausführung einer Lagervorrichtung.

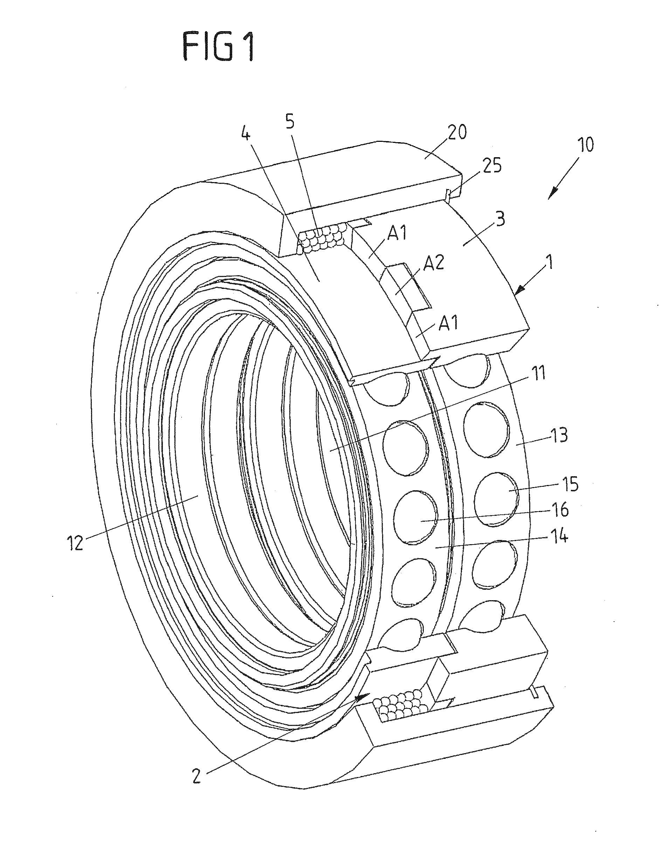

Fig. 1 zeigt eine perspektivische, teilweise geschnittene Darstellung einer mehrreihigen Lagervorrichtung 10. Die hier darstellte Ausführungsform ist als zweireihige Radiallagervorrichtung 10 ausgebildet, d.h. die Lagervorrichtung 10 weist ein erstes Lager 1 und ein zweites Lager 2 auf. Die Lager 1, 2 sind hier als Wälzlager, insbesondere als Kugellager ausgebildet. Es ist aber durchaus möglich, andere Wälzlager oder Gleitlager zu verwenden. Grundsätzlich ist es auch möglich, dass die Wälzlager 1, 2 unterschiedlich ausgebildet sind, d.h. ein reines Axiallager 1 wird mit einem Radiallager 2 zum Übertragen radialer und axialer Kräfte kombiniert.

Die jeweiligen Innenringe 11, 12 der Wälzlager 1, 2 sind in an sich bekannter Weise geteilt. Die Verwendung von geteilten Innenringen ist nicht zwingend, werden aber gerade in Flugzeugtriebwerken häufig verwendet. Auf diese Weise können mehr Wälzkörper 15, 16 verbaut werden als bei Lagern mit ungeteilten Ringen. Der geteilte Innenring 11, 12 ist am inneren Durchmesser angeordnet, denn aufgrund der Fliehkräfte wirken zwischen Kugeln und einem Außenring 3 höhere Kräfte. Durch einen ungeteilten Außenring 3, 4 lässt sich ein besseres Anschmiegungsverhältnis zwischen Kugel und Laufbahn realisieren, um die Flächenpressungen im Rahmen zu halten. Daher haben schnell drehenden Hauptlager in Triebwerken üblicherweise einen zweigeteilten Innenring 11, 12 und einen einteiligen äußeren Außenring 3, 4 (sog. "Drei-Punkt-Lager"). Grundsätzlich kann auch eine einteilige innere Lagerschale verwendet werden.

Um die Innenringe 11, 12 herum sind jeweils Käfige 13, 14 für die Wälzkörper 15, 16 angeordnet. In der vorliegend dargestellten Ausführungsform sind die Wälzkörper 15, 16 als Kugeln ausgebildet. Alternativ können auch Kegel, Zylinder oder Tonnen als Wälzkörper 15, 16 verwendet werden.

Die Wälzkörper 15, 16 sind in radialer Richtung jeweils außen von Außenringen 3, 4 umgeben. In der dargestellten Ausführungsform ist der zweite Außenring 4 etwas flacher ausgebildet als der erste Außenring 3. In dem zur Verfügung stehenden Raum ist eine Schüttung 5 aus einem formlos-festen Wirkmedium als Mittel zum Ausgleich von Axiallasten angeordnet. Nach Außen werden die Außenringe 3, 4 und die Schüttung 5 durch ein Gehäuse 2 abgeschlossen. In axialer Richtung wird die Lagervorrichtung 10 durch ein Gegenlager 25, z.B. einen Sprengring mit dem Gehäuse verbunden. Dies ist z.B. für den Fall der Lastumkehr bei einem Flugzeugtriebwerk von Bedeutung,

Als formlos-fest wird ein Medium bezeichnet, das aus festen Partikeln besteht, wobei die Partikel eine bestimmte oder unbestimmte Partikelgröße haben. Beispiele für ein formlosfestes Medium sind Sand oder eine Kugelschüttung.

Im vorliegenden Beispiel wird eine Schüttung 5 aus Stahlkugeln mit im Wesentlichen gleichem Durchmesser verwendet. Grundsätzlich sind Schüttungen 5 mit Partikeln insbesondere Kugeln mit mittleren Durchmessern zwischen 0,2 und 15 mm geeignet. Insbesondere können Partikel mit mittleren Durchmessern zwischen 3 bis 7 mm, ganz insbesondere 5 mm verwendet werden.

In alternativen Ausführungsformen können die Partikel andere Formen aufweisen und Größenverteilungen aufweisen.

Eine formlos-feste Schüttung 5 verhält sich in vielerlei Hinsicht wie eine Flüssigkeit. So weicht die formlos-feste Schüttung 5 unter Druck aus. Allerdings ist es auf Grund der Partikelgröße nicht notwendig, eine Dichtung vorzusehen, wie dies bei pneumatischen oder hydraulischen Wirkmedien der Fall wäre.

Auf das formlos-feste Wirkmedium der Schüttung 5 wird mittels Kolbenflächen A1, A2 definierter Größe eingewirkt. In radialer Richtung ist die Schüttung 5 zwischen Gehäuse 5 und dem zweiten Außenring 4 fest eingeschlossen, so dass nur Bewegungen in axialer Richtung möglich sind.

Das erste Lager 1 weist dazu am Umfang des ersten Außenrings 3 erste Kolbenflächen A1 auf. Diese sind senkrecht zur Längsachse der Lagervorrichtung 10 ausgebildet und bilden somit eine senkrechte Druckfläche auf die Schüttung 5. Die ersten Kolbenflächen A1 sind dabei im Umfang von einander beabstandet, so dass zwischen den ersten Kolbenflächen A1 ein Zwischenraum besteht.

In diesen Zwischenraum sind zweite Kolbenflächen A2 angeordnet, die mit dem zweiten Außenring 4 des zweiten Lagers 2 verbunden sind.

In der dargestellten Ausführungsform weisen die ersten und zweiten Kolbenflächen jeweils die gleichen Größen auf. In alternativen Ausführungsformen können die Kolbenflächen aber unterschiedliche Größen aufweisen.

Bei bekannten zweireihigen Lagervorrichtungen führen schon kleine Bauabweichungen (z.B. im Mikrometerbereich) und / oder Temperaturgradienten zu einer Ungleichverteilung der axialen Lasten in der Lagervorrichtung. Wenn z.B. der Innenring 10°C wärmer ist, als der Außenring, so kann das z.B. zu einem Versatz von 5 µm führen, was dann zu dem Kräfteungleichgewicht in der Lagervorrichtung führt.

Durch die in Fig. 1 dargestellte Ausführungsform kann diese Kräfteungleichverteilung, unabhängig von den Betriebsbedingungen, verringert oder verhindert werden.

Wenn nun auf Grund einer Ungleichverteilung der Lasten an der Lagervorrichtung, das erste Lager 1 axial stärker belastet wird, drücken die ersten Kolbflächen A1 in Richtung des zweiten Lagers 2, d.h. in die Schüttung 5 hinein. Die Schüttung 5 nimmt den aufgebrachten Druck auf, was dazu führt, dass die Schüttung 5 auf die zweiten Kolbenflächen A2 des zweiten Lagers drückt. Somit wird durch den Druck vom ersten Lager 1 auf die Schüttung 5 ein Gegendruck über die zweiten Kolbenflächen A2 zurück auf das erste Lager 1 ausgelöst. Im Ergebnis wird ein axiales Ungleichgewicht zwischen den Lagern 1, 2 kompensiert; jedes der Lager 1, 2 trägt die Hälfte der axialen Belastung. Selbstverständlich würde ein Ausgleich der Kräfte auch in umgekehrter Richtung vom zweiten Lager 2 auf das erste Lager 1 funktionieren.

In der dargestellten Ausführungsform weisen die Kolbenflächen A1, A2 die gleiche Größe auf, so dass der Druck auf die Schüttung 5 gleich dem rückstellenden Druck auf den Außenring 3, 4 ist. Wenn die Kolbenflächen A1, A2 unterschiedliche Größen aufweisen, so kann eine Kraftverstärkung im Sinne einer hydraulischen Presse erfolgen.

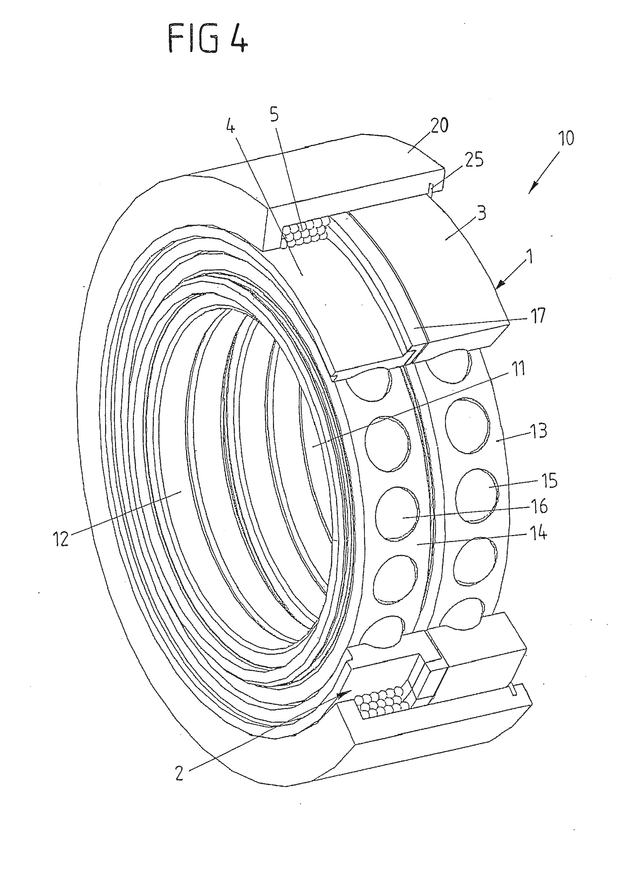

Grundsätzlich ist es möglich, dass die Lageranordnung auch mehr als zwei Lager 1, 2 aufweist. Die Übertragung der Kräfte würde analog zu oben gegeben Beschreibung erfolgen. Sollte es notwendig sein, könnte ein Lager 1, 2, das zu weit von der Schüttung 5 entfernt ist über Druckstäbe, Distanzhülsen oder ähnliches (siehe Fig. 4) mit der Schüttung in Kontakt gebracht werden.

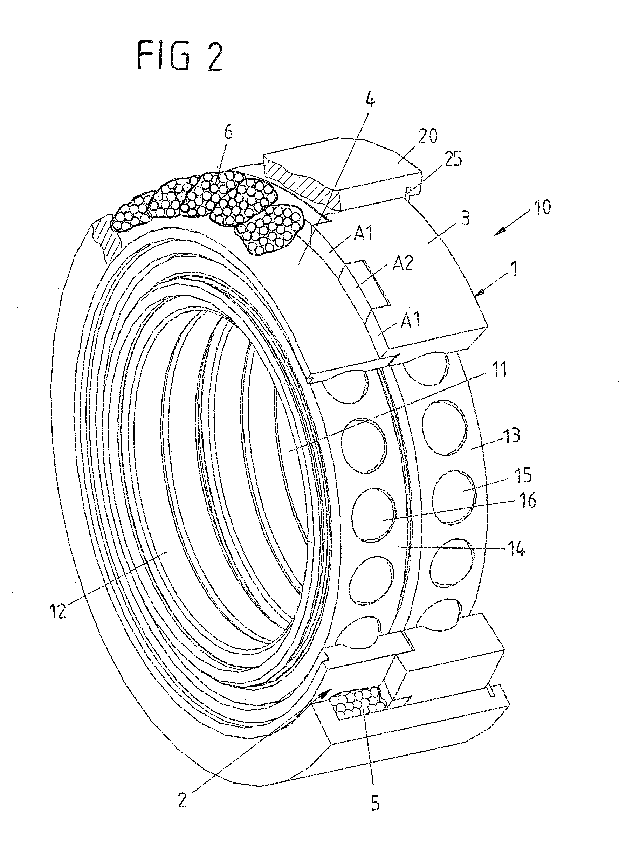

In Fig. 2 ist eine Ausführungsform dargestellt, bei der die Schüttung 5 wieder eine Kugelschüttung aufweist, bei der die Kugeln im Wesentlichen den gleichen Durchmesser aufweisen. Im Gegensatz zu der in Fig. 1 dargestellten Schüttung ist die Schüttung hier in einzelne Pakete unterteilt, d.h. es liegen Schüttungspackungen 6 vor, in denen die Kugeln jeweils in Kunststofffolien eingeschweißt sind. Die Kunststofffolien sind so flexibel, dass die druckausgleichende Wirkung der Schüttung 5 nicht beeinträchtigt wird. Ein Befüllen der Lagervorrichtung 10 wird durch die Verwendung der eingeschweißten Partikel der Schüttung 10 erleichtert. In alternativen Ausführungsformen wird nur eine ringförmige Schüttungspackung 6 verwendet oder es werden mehrere, unterschiedlich große Schüttungspackungen 6 verwendet. Auch ist es möglich, andere Materialien als Umhüllungsmaterial zu verwenden. Die verpackte Schüttung 5 sollte aber wiederum die gesamte Druckkammer ausfüllen. Alternativ oder zusätzlich können die Partikel der Schüttung 5 auch in eine flexible Kunststoffmasse eingebettet sein.

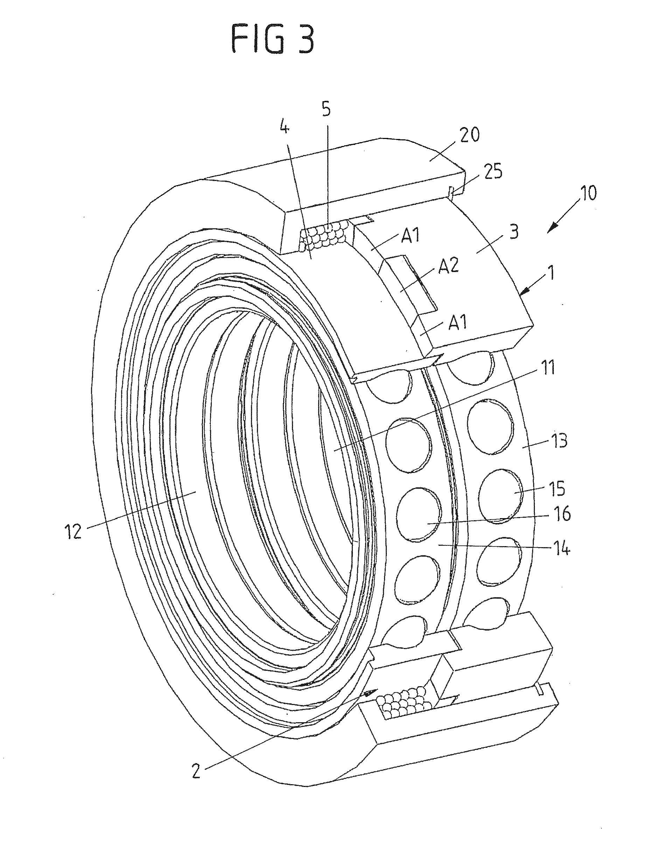

In Fig. 3 ist eine Variante der Ausführungsform dargestellt, die bereits in Fig. 1 beschrieben wurde, so dass auf die entsprechende Beschreibung Bezug genommen werden kann.

Im Unterschied zur Ausführungsform gemäß Fig. 1, ist in der Fig. 3 eine Lagervorrichtung 10 dargestellt, bei der die Kolbenflächen A1, A2 unterschiedliche Größen aufweisen. Die zweite Kolbenfläche A2 ist größer als die Kolbenfläche A1. Damit lassen sich Kraftverstärkungen oder auch eine Einstellung von Verdrängungswegen, analog zu einer hydraulischen Presse vornehmen. In einer alternativen Ausführungsform sind die Kolbenflächen A1 des ersten Lagers 1 größer als die des zweiten Lagers 2. In analoger Weise können auch Druckübertragungselemente 17 unterschiedlicher Größe verwendet werden.

In Fig. 4 ist eine erste Abwandlung der Ausführungsform gemäß Fig. 1 dargestellt, so dass auf die entsprechende Beschreibung Bezug genommen werden kann. Die Übertragung der Kraft auf die Schüttung 5 erfolgt hier aber über ein Druckübertragungselement 17, eine Art ringförmiges Zwischenstück. Damit kann das erste Lager 1 auch noch eine Kraft auf die Schüttung 5 übertragen, falls die Schüttung 5 aus konstruktiven Gründen in Achsenrichtung weiter nach links (in Fig. 4) angeordnet werden muss. Durch die Verwendung von Druckübertragungselementen 17 erhält man konstruktive Freiheitsgerade, da die Schüttung 5 nicht zwingend über dem Lagerring, hier dem Außenring 4, angeordnet werden muss.

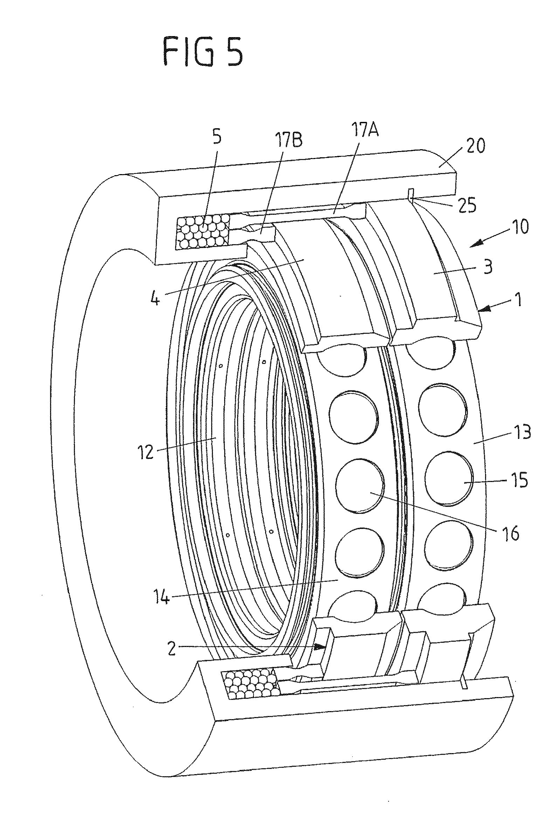

So ist es z.B. möglich, dass die Kugelschüttung außerhalb des eigentlichen Lagers zu positionieren, d.h. axial gegenüber den Außenringen 3, 4 versetzt. In Fig. 4 würde dies bedeuten, dass die Kugelschüttung 5 weiter links, in einem Behälter angeordnet ist, wobei die Kraftübertragung nicht über der den Außenring 3, sondern z.B. mit Distanzhülsen, Druckstäben, o.ä. erfolgt, um die die Axiallast auf die Schüttung 5 übertragen. Eine solche Ausführungsform ist in Zusammenhang mit Fig. 5 dargestellt.

In Fig. 5 ist eine zweite Abwandlung der Ausführungsform gemäß Fig. 1 dargestellt, so dass auf die entsprechende Beschreibung Bezug genommen werden kann. Die Übertragung der Kraft auf die Schüttung 5 erfolgt hier aber über zwei Druckübertragungselemente 17A, 17B, eine Art ringförmiger Zwischenstücke, die auch als hülsenartig aufgefasst werden können. Damit können zwischen den Lagern 1, 2 Kräfte über die Schüttung 5 übertragen werden, die in axialer Richtung neben den Lagern 1, 2 angeordnet ist.

Beide Druckübertragungselemente 17A, 17B sind hier konzentrisch angeordnet. Das erste Druckübertragungselement 17A weist einen größeren Radius und eine größere Breite in axialer Richtung aus als das zweite Druckübertragungselement 17B. Das erste Druckübertagungselement 17A greift axial an den Außenring 3 des ersten Lagers 1, das zweite Druckübertragungselement 17B greift axial an den Außenring 4 des zweiten Lagers 2 an.

Beide Druckübertragungselemente 17A, 17B stehen auf der Seite, die den Außenringen 3, 4, abgewandt ist mit der Schüttung 5 in Kontakt. Wenn ein Druckübertragungselement 17A in axialer Richtung in die Schüttung 5 gedrückt wird, weichen die formlos-festen Partikel, hier Kugeln, als Wirkmedium der Schüttung dem Druck aus und drücken das andere Druckübertragungselement 17B axial in die andere Richtung.

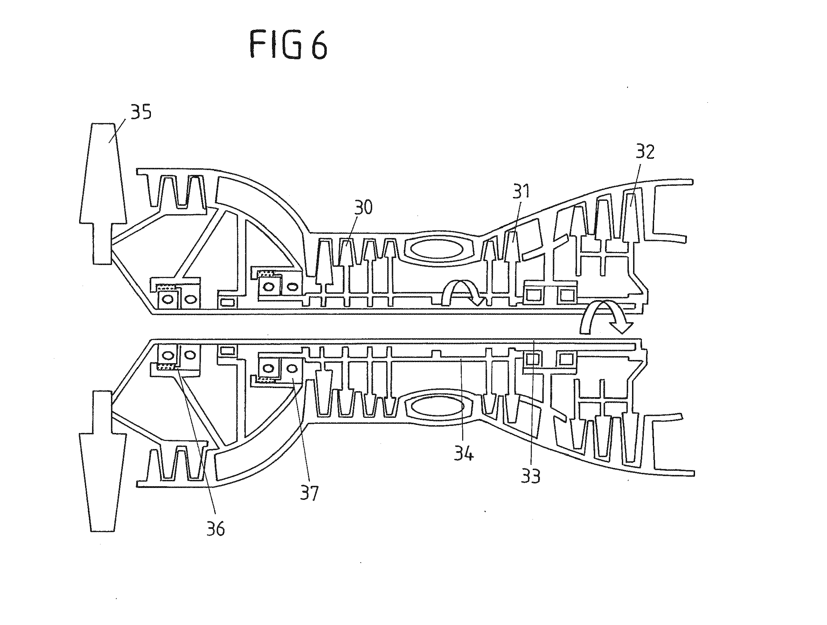

In Fig. 6 ist eine Schnittansicht eines an sich bekannten Flugzeugtriebwerks dargestellt. Dabei weist das Flugzeugtriebwerk zwei Wellen 33, 34 auf. In Strömungsrichtung hinter einem Fan 35 sind ein Hochdruckverdichter 30, eine Hochdruckturbine 31 und eine Niederdruckturbine 32 angeordnet.

Mögliche Einbaustellen für Ausführungen der Lagervorrichtungen sind z.B. das vordere Lager 36 der Niederdruckwelle 34 und / oder das vordere Lager 37 der Hochdruckwelle 33. Die Schüttungen 5 der jeweiligen Lager sind aus Gründen der Übersichtlichkeit nur schematisch dargestellt.

### Bezugszeichenliste

- 1: erstes Lager
- 2: zweites Lager
- 3: Außenring des ersten Lagers
- 4: Außenring des zweiten Lagers
- 5: Schüttung aus formlos-festem Material
- 6: Schüttungspackungen

- 10: Lagervorrichtung
- 11: erster Innenring
- 12: zweiter Innenring
- 13: Käfig für Wälzkörper des ersten Lagers
- 14: Käfig für Wälzkörper des zweiten Lagers
- 15: Wälzkörper des ersten Lagers
- 16: Wälzkörper des zweiten Lagers
- 17: Druckübertragungselement

- 20: Gehäuse
- 25: Gegenlager

- 30: Hochdruckverdichter
- 31: Hochdruckturbine
- 32: Niederdruckturbine
- 33: Hochdruckwelle
- 34: Niederdruckwelle
- 35: Fan
- 36: vorderes Lager der Niederdruckwelle
- 37: vorderes Lager der Hochdruckwelle

- A: Axialkraft
- A1: Kolbenfläche des ersten Lagers
- A2: Kolbenfläche des zweiten Lagers

## Patentansprüche

1. Lagervorrichtung mit einer Anordnung von mindestens zwei Lagern (1, 2),
**dadurch gekennzeichnet, dass**
zwischen einem Lagerring (3, 4) mindestens eines des Lager (1, 2) und einem umgebenden Bauteil (2) der Lageranordnung eine Schüttung (5) aus einem formlos-festen Wirkmedium als Mittel zum Ausgleich von Axiallasten angeordnet ist.

2. Lagervorrichtung nach Anspruch 1, **dadurch** h **gekennzeichnet,** dass die Schüttung (5) Kugeln, insbesondere Kugeln gleicher Größe aufweist.

3. Lagervorrichtung nach Anspruch 1 oder 2, **dadurch gekennzeichnet, dass** der Lagerring als Außenring (3, 4) und das umgebende Bauteil (2) der Lageranordnung als Gehäuse ausgebildet ist.

4. Lagervorrichtung nach mindestens einem der vorhergehenden Ansprüche, **dadurch gekennzeichnet, dass** der Lagerring als Innenring (11, 12) und umgebende Bauteil (2) Teil einer Welle ist, die mit dem Innenring (11, 12) gekoppelt ist.

5. Lagervorrichtung nach mindestens einem der vorhergehenden Ansprüche, **dadurch** h **gekennzeichnet,** dass die Lagerringe, insbesondere die Außenringe (3, 4) jeweils eine definierte Druckfläche, insbesondere Kolbenfläche (A1, A2) aufweisen, mit denen eine axiale Druckkraft auf die Schüttung (5) ausübbar ist.

6. Lagervorrichtung nach Anspruch 5, **dadurch gekennzeichnet, dass** die definierten Kolbenfläche (A1) des ersten Lagerrings, insbesondere des ersten Außenrings (3) und die Kolbenfläche (A2) des zweiten Lagerrings, insbesondere des zweiten Außenrings (4) unterschiedliche Größen haben.

7. Lagervorrichtung nach mindestens einem der vorhergehenden Ansprüche, **dadurch gekennzeichnet, dass** mindestens ein Teil des formlos-festen Wirkmediums in eine Folie verpackt und / oder in eine flexible Kunststoffmasse vergossen ist.

8. Lagervorrichtung nach mindestens einem der vorhergehenden Ansprüche, **dadurch gekennzeichnet, dass** zwischen den Lagerringen, insbesondere den Außenringen (3, 4) und der Schüttung (5) mindestens ein Druckübertragungselement (17), insbesondere eine Distanzhülse, ein Ring und/oder ein Druckstab angeordnet ist,

9. Lagervorrichtung nach Anspruch 8, **dadurch gekennzeichnet, dass** zwischen den Lagerringen, insbesondere den Außenringen (3, 4) und der Schüttung (5) zwei Druckübertragungselemente (17A, 17B) in Form konzentrischer Hülsen angeordnet sind.

10. Lagervorrichtung nach mindestens einem der vorhergehenden Ansprüche, **dadurch gekennzeichnet, dass** mindestens ein Lager (3, 4) als Wälzlager, als Axial-Luftlager oder als Gleitlager ausgebildet ist.

11. Lagervorrichtung nach Anspruch 10, **dadurch gekennzeichnet, dass** die Wälzkörper (15, 16) als Kugeln, Tonnen, Kegeln oder Zylinder ausgebildet sind.

12. Lagervorrichtung nach mindestens einem der vorhergehenden Ansprüche, **dadurch gekennzeichnet, dass** mindestens zwei Lager (1, 2) unterschiedlicher Bauart sind, insbesondere als Radiallager (1, 2) und als Axiallager (2, 1) ausgebildet sind.

13. Lagervorrichtung nach mindestens einem der vorhergehenden Ansprüche, **dadurch gekennzeichnet, dass** mindestens ein Innenring (11, 12) eines Lagers (1, 2) geteilt ausgebildet ist.

14. Turbomaschine, insbesondere ein Flugzeugtriebwerk mit mindestens einer Lagervorrichtung (10) gemäß mindestens einem der Ansprüche 1 bis 13.

15. Turbomaschine nach Anspruch 14, **dadurch gekennzeichnet, dass** mindestens eine Lagervorrichtung (10) bei einem dreiwelligen Flugzeugtriebwerk zwischen einer Niederdruckwelle und einer Mitteldruckwelle oder zwischen einer Mitteldruckwelle und einer Hochdruckwelle oder bei einem zweiwelligen Flugzeugtriebwerk zwischen einer Niederdruckwelle und einer Hochdruckwelle angeordnet ist.
